# EUROPÄISCHE PATENTANMELDUNG

(11) **EP 3 163 725 A1**
(43) Veröffentlichungstag der Anmeldung: **03.05.2017**
(21) Anmeldenummer: 15192507.0
(22) Anmeldetag: 02.11.2015
(51) Int. Cl.: H02K 15/00, H02K 5/22, H02K 9/04

(54) **MASCHINENEINHEIT, TEILSTÜCK UND ZWISCHENELEMENT SOWIE VERFAHREN ZUM VERBINDEN UND/ODER LÖSEN EINER ANSCHLUSSLEITUNG**

(71) Anmelder: Siemens Aktiengesellschaft, 80333 München (DE)
(72) Erfinder: Dölz, Volker, 97616 Bad Neustadt (DE); Schöppach, Melanie, 97638 Mellrichstadt - Bahra (DE)

(57) **Zusammenfassung**

Die Erfindung betrifft eine Maschineneinheit, ein Teilstück (9a) und ein Zwischenelement (9) sowie ein Verfahren zum Verbinden und/oder Lösen einer Anschlussleitung (9b) an einer Maschineneinheit. Zwischen einer elektrischen Maschine (1) und einem Funktionselement (7) des Maschinenelements wird ein Bereich mit einem Zwischenelement (9) und einem Teilstück (9a) weitgehend umschlossen. Das Teilstück (9a) ist von dem Zwischenelement (9) abnehmbar oder aufklappbar. Nach Entfernen des Teilstücks (9a) von dem Zwischenelement (9) ist der ummantelte Bereich vorteilhaft zum Anschluss mit einer Anschlussleitung (9b) zugänglich. Mit der Anschlussleitung (9b) ist beispielsweise ein Geber (5) anschließbar. Durch die Erfindung kann die Anschlussleitung (9b) in dem ummantelten Bereich angeschlossen werden, ohne das Funktionselement (7) entfernen zu müssen. So kann eine elektrische Maschine (1) mit einem Funktionselement (7) auch an schwer zugänglichen Stellen gewartet werden.

## Beschreibung

Die Erfindung betrifft eine Maschineneinheit, ein Teilstück und ein Zwischenelement sowie ein Verfahren zum Verbinden und/oder Lösen einer Anschlussleitung.

Fremdbelüftete elektrische Maschinen weisen meist an zumindest einer Seite ihres Gehäuses einen Lüfter auf, der die elektrische Maschine mit Hilfe eines Luftstroms kühlt. Die Kombination aus einer elektrischen Maschine und einem Funktionselement, welches an einer elektrischen Maschine befestigt ist, wird als Maschineneinheit bezeichnet. Ein Funktionselement kann beispielsweise ein Lüfter sein. Insbesondere bei Servomotoren weist die Maschineneinheit zwischen Lüfter und der elektrischen Maschine einen Geber auf, wobei der Geber einen Anschluss für eine Anschlussleitung aufweist. Zum Anschluss der Anschlussleitung an den Geber muss gemäß dem derzeitigen Stand der Technik zunächst der Lüfter oder ein anderes Funktionselement entfernt werden. Das Entfernen des Lüfters ist zeitaufwändig und bei schwierig zugänglichen elektrischen Maschinen eine schwierige und zeitaufwändige Aufgabe. Bei anderen elektrischen Maschinen verläuft die Anschlussleitung so, dass zum Wechsel der Anschlussleitung der elektrischen Maschine ebenfalls ein Lüfter oder ein anderes Teil, wie ein Steuergerät, entfernt werden muss.

DE 43 04 032 schlägt bei einer Winkelmesseinrichtung mit einem Gehäuse vor, wobei das Gehäuse eine Aussparung aufweist, wobei die Aussparung durch eine schwenkbare Haube abdeckbar ist.

Die Aufgabe der Erfindung ist es daher, den Zugang zu dem Bereich zwischen einer elektrischen Maschine und einem Lüfter oder einem anderen Funktionselement zu vereinfachen.

Die Aufgabe wird durch eine Maschineneinheit gemäß Anspruch 1 gelöst.

Die Aufgabe wird weiter durch ein Verfahren zum Verbinden und/oder Lösen einer Anschlussleitung an einer Maschineneinheit gemäß Anspruch 10 gelöst.

Die Aufgabe wird weiter durch ein Zwischenelement und ein Teilstück zur Beabstandung einer elektrischen Maschine von einem Funktionselement gelöst.

Die Aufgabe wird weiter durch einen Antrieb mit einer solchen Maschineneinheit gelöst.

Vorteilhafte Ausgestaltungen und Weiterbildung der Erfindung sind Gegenstand der abhängigen Ansprüche.

Unter einer Maschineneinheit wird hier eine Einheit aus einer elektrischen Maschine, einem Funktionselement sowie ggf. weiterer Elemente wie einem Geber oder einem Drehmomentwandler verstanden.

Unter einer elektrischen Maschine wird ein Elektromotor oder ein Generator verstanden. Die Erfindung eignet sich auch zum Einsatz bei einem Transformator als elektrische Maschine.

Unter einem Funktionselement kann ein Umrichterelement, ein Getriebe oder eine Steuereinrichtung verstanden werden. Bevorzugt ist das Funktionselement ein Lüfter, der an der Rückseite der elektrischen Maschine befestigt ist. Der Lüfter dient zur Kühlung der elektrischen Maschine sowie optional zur Reinhaltung der elektrischen Maschine. Das Funktionselement ist mit einem Funktionselementbefestigungsmittel mit der elektrischen Maschine verbunden.

Die Anschlussleitung kann mit einem Geber und/oder mit der elektrische Maschine und/oder mit dem Funktionselement verbunden werden und/oder von diesen gelöst werden. Zum Anschluss der Anschlussleitung eignet sich eine Stecker-Buchse-Verbindung oder eine schraubbare Verbindung.

Das Zwischenelement ist vorzugsweise ein U-förmiges Profilstück, das an die Form und Größe der elektrischen Maschine angepasst ist. Das Teilstück kann als gerades Blech oder als U-förmiges Profilstück ausgeführt sein. Die Seiten des Zwischenelements und des Teilstückes sind aufeinander abgestimmt. Das Zwischenelement und das Teilstück, welches an dem Zwischenelement befestigt ist, ummanteln den Bereich, der sich zwischen dem Funktionselement und der elektrischen Maschine erstreckt. Die Dicke der Ummantelung bzw. eine Wandstärke des Zwischenelements sowie des Teilstückes ist zumindest so groß zu wählen, dass das Teilstück an dem Zwischenelement befestigbar ist.

Das Teilstück ist insbesondere als Deckel ausgeführt und dient zur Abdeckung des Zwischenelements, wobei das Zwischenelement zwischen der elektrischen Maschine und dem Funktionselement befestigt ist. Das Zwischenelement und das Teilstück umschließen den Bereich zwischen der elektrischen Maschine und dem Funktionselement.

Die Befestigung des Teilstückes an dem Zwischenelement erfolgt auf zumindest einer Seite. Zur Befestigung des Teilstückes an dem Zwischenelement dient zumindest ein Befestigungsmittel, beispielsweise eine Schraube. Neben einer Schraube eignet sich eine Klemmverbindung zur Befestigung des Teilstückes an dem Zwischenelement. Das Teilstück kann natürlich auch an dem Funktionselement und/oder an der elektrischen Maschine befestigt sein.

Unter Zugänglichkeit wird verstanden, dass die Anschlussleitung weitgehend von Hand an den Geber, der elektrischen Maschine und/oder dem Funktionselement angeschlossen und/oder gelöst werden kann. Der händische Anschluss kann auch mit Hilfe eines Werkzeugs erfolgen. Insbesondere ein Geber, der an der Rückseite der elektrischen Maschine befestigt ist, kann durch eine Anschlussleitung mit einem Steuergerät verbunden werden. Vorteilhaft ist das Teilstück soweit in seiner Ausrichtung veränderbar, dass der weitgehend umschlossene Bereich leicht zugänglich ist und dass die Anschlussleitung ohne Probleme angeschlossen und/oder entfernt werden kann.

Zur Verbindung bzw. zum Lösen der Anschlussleitung wird das Teilstück in seiner Ausrichtung verändert, insbesondere hochgeklappt, oder ganz vom Zwischenelement entfernt. Anschließend wird die Anschlussleitung angeschlossen und/oder eine Anschlussleitung entfernt. Zuletzt wird das Teilstück wieder in seine Ausgangsposition zurückgeführt, insbesondere zugeklappt, und befestigt.

Nach Anschluss oder Wechsel der Anschlussleitung wird das Teilstück wieder fest mit dem Zwischenelement verbunden.

Die Anschlussleitung verläuft durch eine Aussparung in dem Teilstück und/oder in dem Zwischenelement in den ummantelten Bereich.

Die Position der Aussparung ist vorteilhaft so zu wählen, dass die Anschlussleitung bei Veränderung der Ausrichtung oder beim Entfernen nicht mit dem Teilstück oder dem Zwischenelement verbunden bleibt und ohne Schwierigkeiten eingeführt oder entfernt werden kann.

Die Erfindung ermöglicht ein schnelles und einfaches Wechseln, Verbinden oder Lösen der Anschlussleitung von einem Anschluss. Der Anschluss befindet sich vorteilhaft zwischen der Rückseite der elektrischen Maschine und dem Funktionselement. Nach Entfernen bzw. Aufklappen des Teilstücks von dem Zwischenelement ist vorteilhaft ein einfacher Zugang in den Bereich zwischen der elektrischen Maschine und dem Funktionselement möglich. So lassen sich vorteilhaft Wartungsarbeiten vereinfachen sowie die elektrische Maschine gegen schädliche Einwirkungen schützen.

Eine vorteilhafte Maschineneinheit ist dadurch gekennzeichnet, dass das Funktionselement ein Lüfter ist.

Der Lüfter dient beispielsweise zur Belüftung eines Stators oder eines Rotors der elektrischen Maschine. Insbesondere dient der Lüfter zur Belüftung und somit zur Kühlung von Wicklungen der elektrischen Maschine. Der Lüfter kann auch zur Kühlung der Funktionseinheit, insbesondere einem Umrichter, dienen.

Das Zwischenelement und das Teilstück bilden eine Führung für den Kühlluftstrom des Lüfters. Der Kühlluftstrom verläuft vorteilhaft am Geber vorbei in Kühlkanäle der elektrischen Maschine.

Ein weitgehend umschlossener Bereich zwischen dem Lüfter und der elektrischen Maschine dient zur Kanalisierung der durch den Lüfter in die elektrische Maschine eingeführte Luft. Der weitgehend umschlossene Bereich wird auf der einen Seite von der elektrischen Maschine, auf der anderen Seite von dem Funktionselement begrenzt. Seitlich wird der weitgehend umschlossene Bereich von dem Zwischenelement und dem Teilstück ummantelt. Dabei bleibt im Wesentlichen lediglich die Aussparung zur Durchführung der Anschlussleitung frei.

Das Zwischenelement und das Teilstück dienen somit als Kanal für die Luft während des Betriebes der elektrischen Maschine. Gleichzeitig bleibt vorteilhaft der Zugang zu dem weitgehend ummantelten Bereich zwischen dem Lüfter und der elektrischen Maschine zugänglich.

Eine weitere vorteilhafte Ausgestaltung der Maschineneinheit ist dadurch gekennzeichnet, dass das Teilstück mit zumindest einem Befestigungsmittel an dem Zwischenelement lösbar befestigt ist.

Das Teilstück ist durch ein Befestigungsmittel, insbesondere einer Schraube, mit dem Zwischenelement lösbar verbunden. In einer Ausgestaltung kann das Teilstück an zwei Positionen mit dem Zwischenelement verbunden sein, wobei die Positionen an zwei unterschiedlichen Auflageflächen des Zwischenelements lokalisiert sind.

Für eine besonders gut lösbare Befestigung ist ein Klemmmechanismus geeignet, mit dem das Teilstück ohne Einsatz eines Werkzeugs schnell von dem Zwischenelement abgetrennt werden kann oder in seiner Ausrichtung verändert, insbesondere aufgeklappt werden kann.

Eine weitere vorteilhafte Ausgestaltung der Maschineneinheit ist dadurch gekennzeichnet, dass die Aussparung im Bereich eines Übergangs von Zwischenelement und Teilstück lokalisiert ist.

Die Aussparung dient zur Durchführung der Anschlussleitung. Die Aussparung kann rund oder eckig gehalten sein. Vorteilhaft ist die Aussparung zur Durchführung der Anschlussleitung dabei so lokalisiert, dass nach dem Aufklappen oder Entfernen des Teilstückes von dem Zwischenelement die Aussparung und damit optional die Anschlussleitung frei zugänglich ist.

So kann die Anschlussleitung durch die Aussparung hindurch an das Funktionselement, an den Geber oder an die elektrische Maschine angeschlossen sein.

Durch diese Ausführung ist die Anschlussleitung vorteilhaft vor einer starken Belastung geschützt.

Eine weitere vorteilhafte Ausführung der Maschineneinheit ist dadurch gekennzeichnet, dass das Zwischenelement und optional das Teilstück mit wenigstens einem Funktionselementbefestigungsmittel mit der elektrischen Maschine verbunden sind, wobei das Funktionselementbefestigungsmittel zur Befestigung des Funktionselements an der elektrischen Maschine vorgesehen ist.

Das Funktionselement ist meist mittels einer lösbaren Verbindung an der elektrischen Maschine befestigt. Gut als Funktionselementbefestigungsmittel geeignet sind Schrauben, die das Funktionselement mit der beabstandeten elektrischen Maschine verbinden. Die Funktionselementbefestigungsmittel überbrücken hierbei den Bereich, der durch das Zwischenelement und das Teilstück überdeckt ist.

Die Funktionselementbefestigungsmittel können durch Öffnungen, die in das Zwischenteil und das Teilstück eingefügt sind, hindurch zur Verbindung des Funktionselements mit der elektrischen Maschine dienen. Das Zwischenelement und optional das Teilstück kann auch mit mehreren Befestigungsmitteln an der elektrischen Maschine befestigt sein und das Funktionselement kann, insbesondere mit Funktionselementbefestigungsmittel, an dem Zwischenelement und/oder an dem Teilstück befestigt sein.

Durch diese Ausgestaltung können eine vereinfachte Montage des Funktionselements an der elektrischen Maschine erreicht sowie vorteilhaft Befestigungsmittel eingespart werden.

Eine weitere vorteilhafte Ausgestaltung der Maschineneinheit ist dadurch gekennzeichnet, dass das Teilstück und das Zwischenelement zur weitgehenden Umschließung eines Gebers vorgesehen sind.

Ein Geber einer elektrischen Maschine dient vorwiegend zur Erfassung der Position und/oder der Drehzahl eines Rotors in der elektrischen Maschine. Ein Geber sitzt bei einer elektrischen Maschine oft am hinteren Ende und somit im weitgehend umschlossenen Bereich. Aus konstruktiven Vorteilen ist auch das Funktionselement wie eine Steuereinrichtung, ein Umrichter und/oder ein Lüfter am hinteren Ende der elektrischen Maschine positioniert.

Regelmäßig ist eine Integration des Gebers in das Funktionselement nicht möglich. Daher wird das Funktionselement von der elektrischen Maschine beabstandet montiert. Der Bereich zwischen dem Funktionselement und der elektrischen Maschine wäre ohne das Zwischenelement und das Teilstück nicht weitgehend umschlossen und daher freiliegend. Somit würde der Geber und die ggf. zugängliche Rückseite der elektrischen Maschine ungeschützt sein.

Eine weitere vorteilhafte Ausgestaltung der elektrischen Maschine ist dadurch gekennzeichnet, dass das Teilstück schwenkbar zwischen dem Funktionselement und der elektrischen Maschine befestigt ist.

Das Teilstück ist bei dieser Ausgestaltung an einer Seite beweglich gelagert und an der gegenüber liegenden Seite mit dem Zwischenelement lösbar befestigbar. Hierdurch ist das Teilstück aufklappbar, das heißt, in seiner Ausrichtung veränderbar bzw. schwenkbar.

Das Teilstück kann durch eine Öffnung schwenkbar um ein Funktionselementbefestigungsmittel ausgestaltet sein. Hierzu verläuft das Funktionselementbefestigungsmittel durch eine Öffnung des Teilstücks. Die Öffnung ist hierbei im Bereich einer Kante des Teilstücks lokalisiert.

In einer besonders bevorzugten Ausführung dient das Funktionselementbefestigungsmittel zur beabstandeten Befestigung des Funktionselements an der elektrischen Maschine als Achse für das Teilstück. Das Teilstück ist in Bezug zu dieser Achse in seiner Ausrichtung veränderbar, insbesondere hochklappbar. Befestigt wird das Teilstück dann auf der anderen Seite mit Hilfe eines Befestigungsmittels, insbesondere einer Klemmverbindung.

Somit kann ein Wechsel der Anschlussleitung, insbesondere an dem Geber, durch Lösen lediglich eines Befestigungsmittels erfolgen.

Eine weitere vorteilhafte Ausführung der Maschineneinheit ist dadurch gekennzeichnet, dass das Teilstück an einer Seite über ein Scharnier an dem Zwischenelement befestigt ist.

Das Scharnier dient zur Veränderung der Ausrichtung des Teilstücks in Bezug zum Zwischenelement. Das Scharnier kann an dem Funktionselement, dem Zwischenelement oder der elektrischen Maschine befestigt sein.

Auf zumindest einer Seite des Teilstücks, welche im geschlossenen Zustand an eine Oberfläche des Zwischenelements angrenzt, kann das Teilstück über das Scharnier mit dem Zwischenelement befestigt sein.

Durch den Einsatz eines Scharniers ist eine besonders hochwertige und haltbare Verbindung des Teilstücks mit dem Zwischenelement möglich.

Eine weitere vorteilhafte Ausführung der Maschineneinheit weist weiter eine Dichtung auf, so dass der weitgehend umschlossene Bereich, der von dem Teilstück und dem Zwischenelement abgegrenzt ist, gegen Fremdstoffe, insbesondere gegen Staub oder Spritzwasser, geschützt ist.

Eine Abgrenzung des Bereiches zwischen dem Funktionselement und der elektrischen Maschine dient zum Schutz des Funktionselements und/oder der elektrischen Maschine sowie eines optionalen Gebers gegen äußere Einflüsse. Daher dient eine Abdichtung der Bereiche, an denen das Zwischenelement und das Teilstück aneinander angrenzen, vorteilhaft zum Schutz der elektrischen Maschine und/oder des Funktionselements.

Eine Abdichtung kann durch eine Beaufschlagung der Abschnitte mit einer Polymer-Schicht ausgeführt sein. Die Abdichtung ist insbesondere an den Bereichen vorteilhaft, an denen das Teilstück und das Zwischenelement angrenzen. Weiter eignet sich eine Gummidichtung im Bereich der genannten Abschnitte.

Durch eine solche Dichtung wird vorteilhaft der Einsatzbereich einer solchen elektrischen Maschine erheblich erweitert.

Eine Dichtung kann auch die Anschlussleitung umfassen und dient zum Schutz der Anschlussleitung, insbesondere gegen Beanspruchung durch mechanische Belastung.

Die Erfindung ist insbesondere bei Maschineneinheiten sowie bei einem Antrieb für elektrisch angetriebene Fahrzeuge breit einsetzbar. Weiter sind wartungsintensive industrielle Anlagen vorteilhafte Einsatzgebiete der Erfindung aufgrund des leichten Zugangs zu der Anschlussleitung.

Im Folgenden wird die Erfindung anhand von Figuren näher beschrieben und erläutert. Dabei bezeichnen gleiche Bezugszeichen gleiche Elemente über die Figuren hinweg. Selbstverständlich können die in den Figuren gezeigten Merkmale zu neuen Ausführungsformen der Erfindung kombiniert werden, ohne die hier beschriebene Erfindung zu verlassen. Es zeigen:
- FIG 1: eine elektrische Maschine mit einem Funktionselement,
- FIG 2: die Maschineneinheit aus einer anderen Ansicht,
- FIG 3: eine Profildarstellung des Zwischenelements und des Teilstücks sowie
- FIG 4: ein Zwischenelement und ein Teilstück.

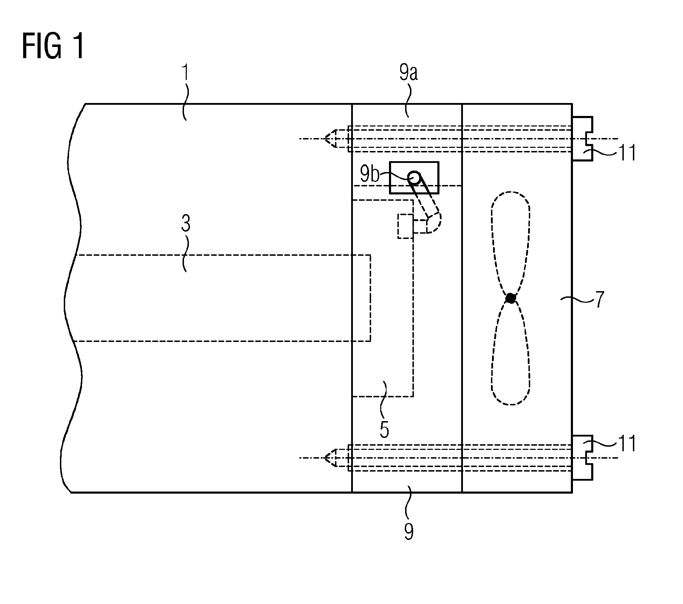

FIG 1 zeigt eine elektrische Maschine 1 mit einem Funktionselement 7. Das Funktionselement 7 ist hier als Lüfter dargestellt. Die elektrische Maschine 1 weist an ihrer Rückseite einen Geber 5 auf. Der Geber 5 ist an den Rotor 3 der elektrischen Maschine 1 gekoppelt. Der Geber 5 befindet sich zwischen der elektrischen Maschine 1 und dem Funktionselement 7 lokalisiert. Das Funktionselement ist mit Funktionselementbefestigungsmitteln 11 an der elektrischen Maschine 1 befestigt. Der Bereich zwischen der elektrischen Maschine 1 und dem Funktionselement 7 wird bis auf eine Aussparung 9c von einem Zwischenelement 9 und einem Teilstück 9a umschlossen.

Das Teilstück 9a und das Zwischenelement 9 weisen an einer Seite eine Aussparung 9c auf. Die Aussparung 9c dient zur Durchführung einer Anschlussleitung 9b in den ummantelten Bereich. Die Aussparung 9c ist weitgehend im Teilstück 9a lokalisiert. Die Aussparung 9c kann jedoch ebenso an der im Zwischenelement 9 oder in dem Teilstück 9a lokalisiert sein. Die Anschlussleitung 9b kann bei Trennung des Teilstücks 9a von dem Zwischenelement 9 händisch an den Geber 5 angeschlossen werden. Händisch bedeutet hier, dass für ein Verbinden und/ oder Lösen der Anschlussleitung 9b aufgrund der Größe des weitgehend umschlossenen Bereiches kein kompliziertes Werkzeug zum Wechsel/Anschluss der Anschlussleitung 9b notwendig ist. Nach dem händischen Anschluss der Anschlussleitung 9b an den Geber 5 kann das Teilstück 9a wieder an das Zwischenelement 9 geführt werden. Das Teilstück 9a ist entweder nur an dem Zwischenelement 9 befestigt oder auf maximal einer Seite mit dem Zwischenelement 9 befestigt, sofern die Ausrichtung des Teilstücks 9a veränderbar ist.

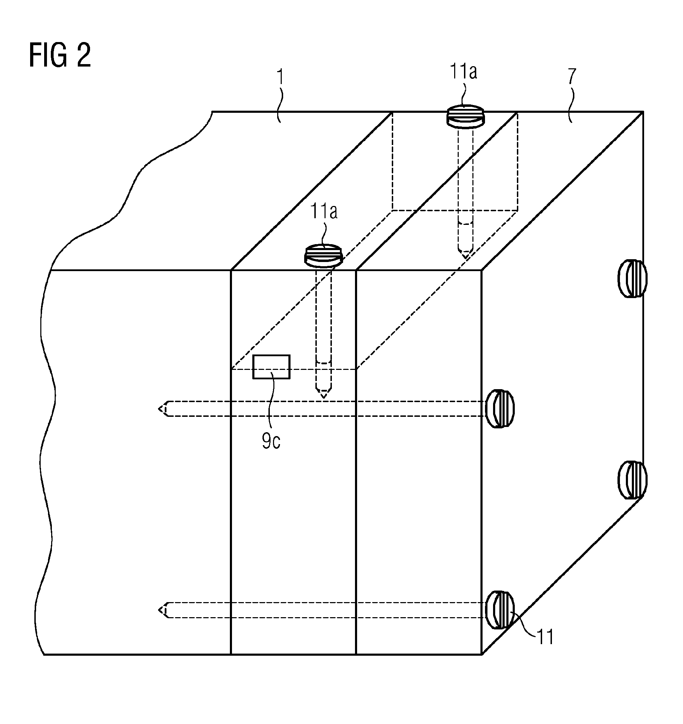

FIG 2 zeigt die Maschineneinheit aus einer anderen Ansicht. Bei der hier gezeigten Ausführung ist das Teilstück 9a an der Oberseite des Zwischenelements 9 befestigt. Die Befestigung des Teilstücks 9a erfolgt durch zwei Befestigungsmittel 11a. Als Befestigungsmittel 11a sind hier als Schrauben dargestellt. Die Funktionselementbefestigungsmittel 11 verlaufen jeweils durch eine Öffnung in dem Teilstück 9a durch dieses hindurch. Weitere Funktionselementbefestigungsmittel 11 greifen in das Zwischenelement 9 und dienen zur Befestigung des Funktionselements 7. Anstelle von den gezeigten Schrauben können die Funktionselementbefestigungsmittel 11 auch durch eine Klemmvorrichtung ausgeführt sein.

Zur Befestigung des Funktionselements 7 an der elektrischen Maschine 1 dienen Funktionselementbefestigungsmittel 11. Als Funktionselementbefestigungsmittel 11 sind hier Schrauben zu bevorzugen. Das Funktionselement 7 ist um die Breite des Zwischenelements 9 und/oder um die Breite des Teilstücks 9a beabstandet an der elektrischen Maschine 1 befestigt. Die Funktionselementbefestigungsmittel 11 durchlaufen den weitgehend umschlossenen Bereich und greifen in die elektrische Maschine 1.

An der Grenze zwischen dem Zwischenelement 9 und dem Teilstück 9a ist die Aussparung 9c lokalisiert. Durch die Aussparung 9c kann die Anschlussleitung 9b in das Innere des weitgehend umschlossenen Bereichs geführt sein.

In der hier gezeigten Ausführung der Erfindung sind die Funktionselementbefestigungsmittel 11 und die Befestigungsmittel 11a von außen zugänglich. Es ist aber ebenso möglich, dass das Funktionselement 7 an dem Zwischenelement 9 befestigt ist und das Zwischenelement 9 an der elektrischen Maschine 1 befestigt ist. Dies gilt entsprechend auch für das Teilstück 9a.

In dem hier gezeigten Ausführungsbeispiel ist es auch möglich, dass die Funktionselementbefestigungsmittel 11 sämtlich im Bereich des Zwischenelements 9 verlaufen, d.h. entgegen der gezeigten Position weiter unterhalb angeordnet sind. So stören die Funktionselementbefestigungsmittel 11 nicht den Zugang zur Anschlussleitung 9b und/oder zum Geber 5. Die Funktionselementbefestigungsmittel 11 können sämtlich im Bereich des Zwischenelements 9 angeordnet sein und optional durch Öffnungen in dem Zwischenelement 9 verlaufen.

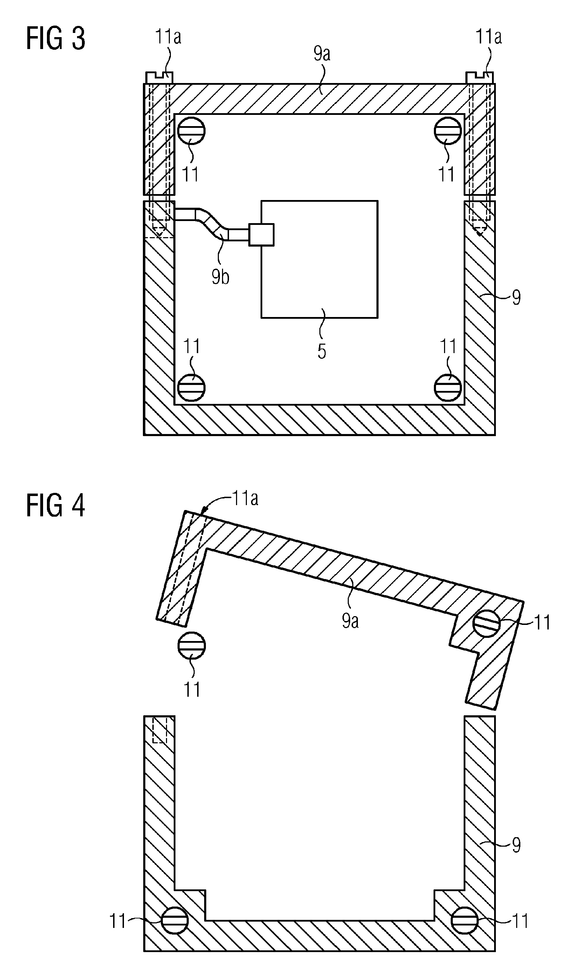

FIG 3 zeigt eine Profildarstellung des Zwischenelements 9 und des Teilstücks 9a. Die Profildarstellung zeigt die Rückseite der elektrischen Maschine 1. Der weitgehend umschlossene Bereich weist in der Mitte den Geber 5 auf, wobei der Geber 5 der elektrischen Maschine 1 zugeordnet ist. Der weitgehend umschlossene Bereich wird an der Unterseite und bereichsweise an den Seitenflächen von dem Zwischenelement 9 begrenzt. Auf dem Zwischenelement 9 ist das Teilstück 9a aufgesetzt.

Das Teilstück 9a ist mit Hilfe von zwei Befestigungsmittel 11a lösbar befestigt. Das Zwischenelement 9 weist die Aussparung 9c auf. Die Aussparung 9c dient zur Durchführung der Anschlussleitung 9b aus dem weitgehend umschlossenen Bereich. Die Anschlussleitung 9b dient hier zum Anschluss des Gebers 5 der elektrischen Maschine 1. Die Anschlussleitung 9b wird dabei durch die Aussparung 9c geführt.

In den Ecken des ummantelten Bereiches verlaufen die Funktionselementbefestigungsmittel 11, die zur Befestigung des Funktionselements 7 vorgesehen sind.

FIG 4 zeigt ein Zwischenelement 9 und ein Teilstück 9a. Das Teilstück 9a ist in der Ausrichtung veränderbar. Die Ausrichtung des Teilstücks 9 ist durch ein Funktionselementbefestigungsmittel 11 als Achse veränderbar. Somit dient eines der Funktionselementbefestigungsmittel 11 als Drehachse für das Teilstück 9a. Das Zwischenelement 9 weist Öffnungen zur Durchführung der Funktionselementbefestigungsmittel 11 auf. Auf einer Seite wird das Teilstück 9a mit einem Befestigungsmittel 11a an dem Zwischenelement 9 befestigt. Die Befestigung erfolgt vorteilhaft durch ein einzelnes Befestigungsmittel 11a. Auf der Seite, auf der das Teilstück 9a an dem Zwischenelement 9 befestigt wird, ist das Funktionselementbefestigungsmittel 11 lediglich angedeutet. Vorteilhaft ist die Ausrichtung des Teilelements 9a nicht von dem angedeuteten Funktionselementbefestigungsmittel 11 beeinflusst.

Zusammenfassend betrifft die Erfindung eine Maschineneinheit, ein Teilstück 9a und ein Zwischenelement 9 sowie ein Verfahren zum Verbinden und/oder Lösen einer Anschlussleitung 9b an einer Maschineneinheit. Zwischen einer elektrischen Maschine 1 und einem Funktionselement 7 der Maschineneinheit wird ein Bereich mit einem Zwischenelement 9 und einem Teilstück 9a weitgehend umschlossen. Das Teilstück 9a ist von dem Zwischenelement 9 abnehmbar oder aufklappbar. Die Abnahme des Teilstückes 9a erfolgt durch Lösen von zwei Befestigungselementen 11a. Das Aufklappen des Teilstücks 9a erfolgt vorteilhaft nach Lösen eines einzelnen Befestigungselements 11a. Nach Entfernen des Teilstücks 9a von dem Zwischenelement 9 ist der (weitgehend) ummantelte Bereich vorteilhaft zum Anschluss einer Anschlussleitung 9b zugänglich. Mit der Anschlussleitung 9b ist beispielsweise ein Geber 5 anschließbar. Durch die Erfindung kann die Anschlussleitung 9b in dem ummantelten Bereich angeschlossen werden, ohne das Funktionselement 7 entfernen zu müssen. So kann eine elektrische Maschine 1 mit einem Funktionselement 7 auch an schwer zugänglichen Stellen gewartet werden.

## Patentansprüche

1. Maschineneinheit, aufweisend eine elektrische Maschine (1), ein Funktionselement (7), insbesondere einen Lüfter, ein Zwischenelement (9) und ein Teilstück (9a), wobei das Funktionselement (7) mit der elektrischen Maschine (1) über das Zwischenelement (9) und das Teilstück (9a) beabstandet verbunden ist, **dadurch gekennzeichnet,**
- **dass** das Zwischenelement (9) und das Teilstück (9a) den Bereich zwischen der elektrischen Maschine (1) und dem Funktionselement (7) bis auf eine Aussparung (9c) weitgehend umschließt,
- **dass** das Teilstück (9a) abnehmbar ist und/oder eine Ausrichtung des Teilstückes (9a) in Bezug auf das Zwischenelement (9) veränderbar ist,
- und **dass** durch Abnahme oder Ausrichtung des Teilstücks (9a) der Bereich zwischen der elektrischen Maschine (1) und dem Funktionselement (7) zum Verbinden und/oder Lösen einer Anschlussleitung (9b) zugänglich ist.

2. Maschineneinheit nach Anspruch 1, **dadurch gekennzeichnet, dass** das Funktionselement (7) ein Lüfter ist.

3. Maschineneinheit nach Anspruch 1 oder 2, **dadurch gekennzeichnet, dass** das Teilstück (9a) mit zumindest einem Befestigungsmittel (11a) an dem Zwischenelement (9) lösbar befestigt ist.

4. Maschineneinheit, nach einem der vorangehenden Ansprüche, **dadurch gekennzeichnet, dass** die Aussparung (9c) im Bereich eines Übergangs von Zwischenelement (9) und Teilstück (9a) lokalisiert ist.

5. Maschineneinheit nach einem der vorangehenden Ansprüche, **dadurch gekennzeichnet, dass** das Zwischenelement (9) und optional das Teilstück (9a) mit wenigstens einem Funktionselementfestigungselement (11) mit der elektrischen Maschine (1) verbunden sind, wobei das Funktionselementbefestigungsmittel (11) zur Befestigung des Funktionselements (7) an der elektrischen Maschine (1) vorgesehen ist.

6. Maschineneinheit nach einem der vorangehenden Ansprüche, **dadurch gekennzeichnet, dass** das Teilstück (9a) und das Zwischenelement (9) zur weitgehenden Umschließung eines Gebers (5) vorgesehen sind.

7. Maschineneinheit nach einem der vorangehenden Ansprüche, **dadurch gekennzeichnet, dass** das Teilstück (9a) schwenkbar zwischen dem Funktionselement (7) und der elektrischen Maschine (1) befestigt ist.

8. Maschineneinheit nach einem der vorangehenden Ansprüche, **dadurch gekennzeichnet, dass** das Teilstück (9a) an einer Seite über ein Scharnier an dem Zwischenelement (9) befestigt ist.

9. Maschineneinheit nach einem der vorangehenden Ansprüche, weiter aufweisend eine Dichtung, so dass der weitgehend umschlossene Bereich, der von dem Teilstück (9a) und dem Zwischenelement (9) abgegrenzt ist, gegen Fremdstoffe, insbesondere gegen Staub oder Spritzwasser, geschützt ist.

10. Verfahren zum Verbinden und/oder Lösen einer Anschlussleitung (9b) an einer Maschineneinheit nach einem der vorangehenden Ansprüche, wobei ein Bereich zwischen der elektrischen Maschine (1) und dem Funktionselement (7) mit dem Teilstück (9a) und dem Zwischenelement (9) weitgehend umschlossen wird, wobei zum Anschluss der elektrischen Maschine (1) und/oder eines Gebers (5) und/oder des Funktionselements (7) das Teilstück (9a) zwischen dem Funktionselement (7) und der elektrischen Maschine (1) entfernt wird oder das Teilstück (9a) in seiner Ausrichtung so verändert wird, dass der Bereich für einen Wechsel der Anschlussleitung (9b) zugänglich wird, und wobei nach dem Wechsel der Anschlussleitung (9b) das Teilstück (9a) wieder mit dem Zwischenelement (9) verbunden wird, bzw. in seiner Ausrichtung so verändert wird, dass der Bereich wieder weitgehend von dem Teilstück (9a) und dem Zwischenelement (9) umschlossen ist.

11. Zwischenelement (9) und Teilstück (9a) zur Beabstandung einer elektrischen Maschine (1) von einem Funktionselement (7), wobei das Teilstück (9a) und das Zwischenelement (9) zur Anordnung zwischen der elektrischen Maschine (1) und/oder dem Funktionselement (7) vorgesehen ist, wobei das Teilstück (9a) entweder in seiner Ausrichtung veränderbar ist und/oder nach Lösen von zumindest einem Funktionselementbefestigungsmittel (11) entfernbar ist.

12. Antrieb, aufweisend eine Maschineneinheit nach einem der Ansprüche 1 bis 9.
